# EUROPEAN PATENT APPLICATION

(11) **EP 2 012 232 A2**
(43) Date of publication of application: **07.01.2009**
(21) Application number: 08164960.0
(22) Date of filing: 22.09.2004
(51) Int. Cl.: G06F 9/445, G06F 17/22, H04L 29/06

(54) **Program, apparatus and method for downloading and installing a program**

(30) Priority: 22.09.2003 JP 2003330768; 31.08.2004 JP 2004252970
(62) Divisional of application: 04255766.0
(71) Applicant: Fujitsu Limited, Kawasaki-shi, Kanagawa 211-8588 (JP)
(72) Inventor: Higuchi, Hisamichi c/o Fujtisu Limited, Kawasaki-shi Tokyo 211-8588 (JP); Terada, Yuji c/o Fujitsu Prime Soft. Tech. Ltd, Nagoya-shi Aichi 461-0004 (JP); Ando, Yoshikazu c/o Mitsuiwa Engineering Corp., Tokyo Tokyo (JP)
(74) Representative: Sunderland, James Harry

(57) **Abstract**

Provided is a program for causing a computer to execute the steps of: automatically sending a request (S100) including execution environment identification information for identifying its program execution environment to a predetermined server through a network; receiving (S104) a list including installation candidates which can be installed under the program execution environment identified by the execution environment identification information from the predetermined server through the network; selecting (S105-S108) an installation candidate from the list according to a predetermined condition; and installing (S110-S111) the selected installation candidate.

## Description

The invention generally relates to a technique for reducing the traffic on a network when a computer connected to the network downloads installation candidates through the network.

Conventionally, in a known technique for allowing a computer connected to a network to download installation candidates through the network, a user individually designates target components for downloading, and downloads all of the installation candidates (e.g., see Non-Patent document 1) .
(Non-Patent document 1)
http://windowsupdate.microsoft.com/

However, if all of the installation candidates are downloaded, some of the downloaded installation candidates are not suitable for the program execution environment of the computer. That is, unnecessary traffic is generated, and the traffic on the network is increased. It is therefore desirable to provide a technique for causing a computer to download only data which is suitable for the program execution environment of the computer.

According to a first aspect of the present invention, there is provided a program for causing a computer connected to a network to execute the steps of: sending a request including execution environment identification information identifying the computer's program execution environment to a predetermined server through the network; receiving a list including installation candidates which can be installed under the program execution environment identified by the execution environment identification information from the predetermined server through the network; selecting an installation candidate from the list according to a predetermined condition; and installing the selected installation candidate.

According to the invention, a list of installation candidates which can be installed under the program execution environment of a predetermined computer is received from a predetermined server. An installation candidate selected from the list is installed on the computer. Therefore, a computer can download only data which is suitable for its program execution environment. Therefore, unlike the conventional case, it is possible to prevent unnecessary traffic from being generated when the computer downloads data which is not suitable for its program execution environment.

Further, in the program, for example, the execution environment identification information includes information for identifying a model name of the computer, and information for identifying an operating system installed in the computer. These are examples of the execution environment identification information. Therefore, the execution environment identification information according to the invention is not limited to these items of information, and may include other program execution environment identification information.

Preferably, in the program, the installation candidate is a driver program. This is an example of the installation candidate. Therefore, the installation candidate according to the invention is not limited to the driver program, and other installation candidates may be used.

Preferably also, the list includes a download destination address of the installation candidate. The selected installation candidate is downloaded from the download destination address, and installed. In this manner, only the necessary installation candidate is downloaded, and generation of unnecessary traffic can be prevented more effectively.

According to a second aspect, there is provided a program for causing a computer to execute the steps of: obtaining a date regarding an installation candidate; comparing the date regarding the installation candidate with a predetermined date; determining whether the installation candidate is to be installed based on a result of the comparison; and installing the installation candidate when it is determined that the installation candidate is to be installed.

In this manner, it is possible to improve accuracy in the determination in comparison with a case in which determination for installation is made based on version comparison.

According to a third aspect of the present invention, there is provided a program for causing a computer to execute the steps of: prompting a user to input predetermined information; converting the input predetermined information to an invisible character string by combining a first invisible character and a second invisible character according to a predetermined rule; and adding the converted invisible character string to a predetermined file.

In this manner, it is possible to hide incomprehensible marks (e.g. non-text symbols) or the like from a client who browses a predetermined file (document to be presented to the client such as a "Read Me" file). That is, predetermined information is provided without awareness by users using the existing infrastructure where users view the information. Based on the information, it is possible to provide the program user with information which is totally different from the document.

In a fourth aspect, the program may include the steps of: obtaining a predetermined file; extracting an invisible character string including the first invisible character and the second invisible character from the obtained predetermined file; and converting the extracted invisible character string into the original predetermined information according to a predetermined rule.

In this manner, it is possible to hide incomprehensible marks from a client who browses a predetermined file (document to be presented to the client such as a "Read Me" file). That is, predetermined information is provided without awareness by users using the existing infrastructure where users view the information. Based on the information, it is possible to provide the program user with information which is totally different from the document.

In the program, for example, the predetermined information is a control code. This is an example of the predetermined information. Therefore, the predetermined information is not limited to this, and other information may be used as the predetermined information.

According to a fifth aspect, there is provided a program for causing a computer connected to a network to execute the steps of: setting a time later than a previous access time as the next access time through the network when an elapsed time period (e.g. days) from a reference date exceeds a predetermined threshold; and accessing at the set (next) time through the network.

In this manner, it is possible to distribute the access from a plurality of computers.

According to a sixth aspect, there is provided a program for causing a computer connected to a network to execute the steps of: obtaining a start time of starting (acquiring) the program; and accessing a predetermined server through the network at a timing determined based on the obtained start time.

The program may cause the computer to execute the steps of a calculating (equation) hours of reference time point + (minutes of reference time point + seconds of reference time point x coefficient 1) minutes + (seconds of reference time point + milliseconds of reference time point x coefficient 2) seconds + milliseconds of reference time point + offset time; and accessing the predetermined server through the network at timing of hour, minute, and second indicated by the calculation result.

In this manner, it is possible to distribute the access from a plurality of computers at substantially the same time.

According to a further aspect of the present invention, there is provided an information processing apparatus connected to a network, including: means for sending a request including execution environment identification information for identifying the apparatus's program execution environment to a predetermined server through the network; means for receiving a list including installation candidates which can be installed under the program execution environment identified by the execution environment identification information from the predetermined server through the network; means for selecting an installation candidate from the list according to a predetermined condition; and means for installing the selected installation candidate.

According to a still further aspect of the present invention, there is provided an installing method for installing a program on a computer including the steps of: sending a request including execution environment identification information for identifying the computer's program execution environment to a predetermined server through a network; receiving a list including installation candidates which can be installed under the program execution environment identified by the execution environment identification information from the predetermined server through the network; selecting an installation candidate from the list according to a predetermined condition; and installing the selected installation candidate.

According to a still further aspect of the present invention, there is provided a system connected to a network, including: an information processing apparatus; and a predetermined server, the information processing apparatus including means for sending a request including execution environment identification information for identifying its program execution environment to the predetermined server through the network, means for receiving a list including installation candidates which can be installed under the program execution environment identified by the execution environment identification information from the predetermined server through the network, means for selecting an installation candidate from the list according to a predetermined condition, and means for installing the selected installation candidate.

According to the system, the information processing apparatus may include means for sending a request including execution environment identification information for identifying its program execution environment to the predetermined server through the network, means for receiving a list including installation candidates which can be installed under the program execution environment identified by the execution environment identification information from the predetermined server through the network, means for selecting an installation candidate from the list according to a predetermined condition, and means for installing the selected installation candidate, and the predetermined server may include means for receiving the request sent from the information processing apparatus, means for retrieving information about the installation candidates which can be installed under the program execution environment identified by the execution environment identification information included in the request from a predetermined database, and means for sending the retrieval result as the list including the installation candidates to the information processing apparatus.

The predetermined server used herein means, for example, an existing server having the respective means. In this manner, it is possible to achieve establishment and management of a program automatic updating system us ing a network at low cost. That is, for example, the user can use the existing server which is established such that the user can search and download various programs (installation candidates) such as drivers corresponding to computers, and can use the computer (user's personal computer) to update the programs through the network.

According to the invention, a computer can download only data which is suitable for its program execution environment.

Reference will now be made, by way of example only, to the accompanying drawings, in which:
FIG. 1 is a view for explaining a general structure of a network system according to an embodiment.
FIG. 2 is a sequence diagram for explaining a driver updating process.
FIG. 3 is a flow chart for explaining a determination process by an apparatus 100.
FIG. 4 is a flow chart for explaining the determination process by the apparatus 100.
FIG. 5 is an example of a screen displaying drivers as installation candidates.
FIG. 6 is a flow chart for explaining a method of encoding predetermined information into an invisible character string.
FIG. 7 is an example of control codes or the like.
FIG. 8 is a flow chart for explaining a method for decoding a control code, which has been encoded into the invisible character string, into the original control code.
FIG. 9 is a flow chart for explaining a process of distributing access from a plurality of apparatuses 100.
FIG. 10 is a view for explaining the process of distributing access from the plurality of apparatuses 100.
FIG. 11 is a diagram for explaining a conventional example.
FIG. 12 is a view for explaining a conventional example.
FIG. 13 is a view for explaining the process of distributing access from the plurality of the apparatuses 100.
FIG. 14 is a flow chart for explaining the process of distributing access from the plurality of the apparatuses 100.
FIG. 15 is a view for explaining the relationship between respective reference time points and distributed request time calculatedbased on the reference time points.
FIG. 16 is a view for explaining the relationship between respective reference time points and distributed request time calculated based on the reference time points.

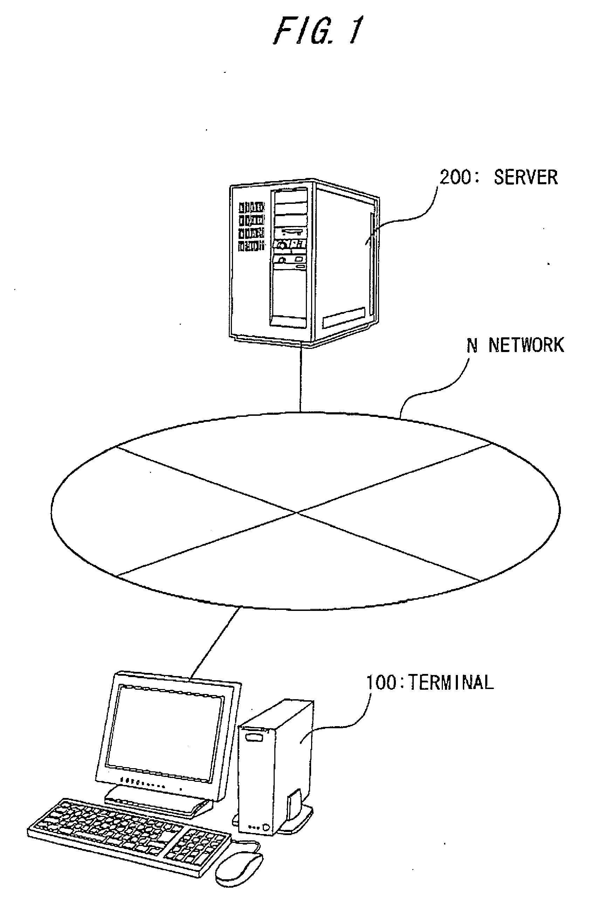

Hereinafter, an embodiment of the invention will be described with reference to the drawings. FIG. 1 is a view for explaining a schematic structure of a network system according to the embodiment.

As shown in FIG. 1, the network system according to the embodiment includes an apparatus (also referred to as the "client") 100 connected to a network N such as the Internet, and a server 200. The apparatus 100 is an ordinary information processing apparatus such as a personal computer, which includes, e.g. , a computer body, input devices such as a keyboard and a mouse, and a display device such as a display, a storage device such as a hard disk drive, and a communication device connected to the network N. Programs such as a predetermined program for carrying out various processes as described later are installed in the apparatus 100. Though FIG. 1 only shows one apparatus 100, actually, a plurality of apparatuses 100 may be connected to the network N.

The server 200 is an ordinary information processing apparatus such as a workstation. The server 200 includes, e.g., a computer body, a storage device such as a hard disk drive connected to the computer body, and a communication device connected to the network N. The server 200 may include input devices such as a keyboard and a mouse, and a display device such as a display. Programs such as a predetermined program for carrying out various processes as described later are installed in the server 200.

Next, operation of the network system having the structure will be described with reference to the drawings. In the following description, operations of the apparatus 100 and the server 200 are carried out when the apparatus 100 and the server 200 read and execute the predetermined programs, respectively.

### (Driver update process)

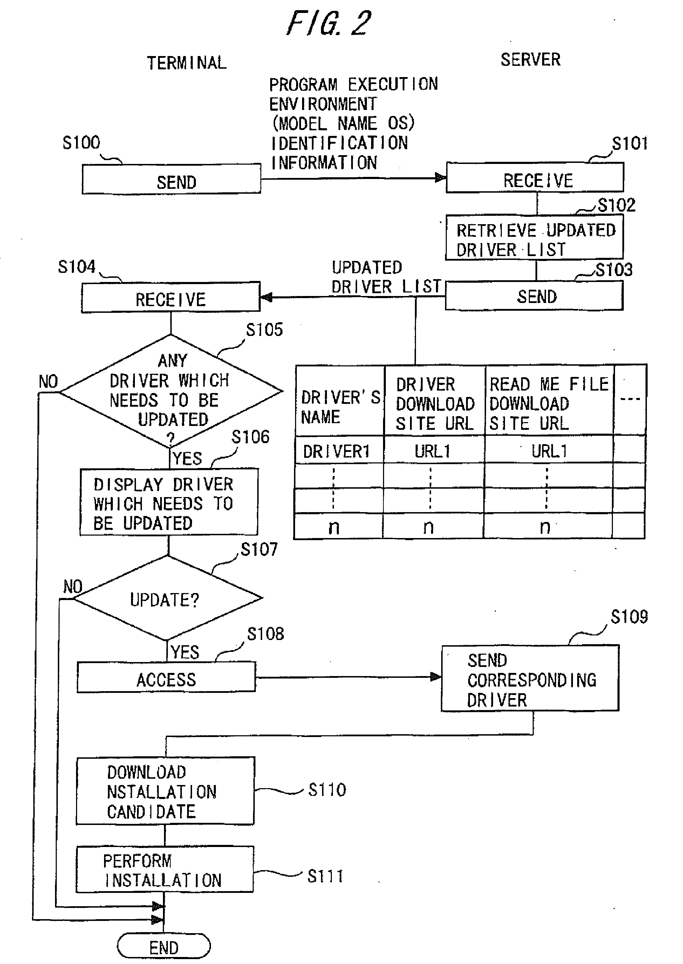

FIG. 2 is a sequence chart for explaining a driver update process. In the sequence, the predetermined program according to the invention is executed for controlling operation of the apparatus 100.

When the apparatus 100 detects a predetermined event or the like after the predetermined program of the embodiment installed in the apparatus 100 is executed, it automatically sends a request including execution environment identification information for identifying its program execution environment to the server 200 through the network N (S100). There are an input of transmission instruction from the input device connected to the apparatus 100 and an arrival of a predetermined timing, etc. as the predetermined event. Further, there is information for identifying a model name of the apparatus 100 and information for identifying an operating system installed in the apparatus 100, etc. as the execution environment identification information. The predetermined event and the execution environment identification information might be used alone. Or, The predetermined event and the execution environment identification information might be used in combination.

The server 200 receives the request from the apparatus 100 (S101), and retrieves information about drivers (corresponding to installation candidates of the invention) which can be installed under the program execution environment identified by the execution environment identification included in the request, from a predetermined database (S102). The predetermined database stores the correspondence relationship between execution environment identification information (e.g., information for identifying a model name and information for identifying an operating system) and information about drivers (e.g., driver's name). Therefore, the server200 can retrieve (narrow down) information about drivers (driver's name or the like) corresponding to the execution environment identification information by collating the execution environment identification information with the predetermined data base. The server 100 is an existing server which supplies programs such as drivers that are retrievable by the user himself. In the embodiment the existing server is utilized so that a system which carries out updating of programs such as drivers for the apparatus 100 through the network can be established at low cost.

When the information about drivers is retrieved, the server 200 generates a driver list, and transmits the driver list to the apparatus 100 which is the sender of the request (S103). The driver list is a list including information about drivers which can be installed under the program execution environment of the apparatus 100. As shown in FIG. 2, there are driver's names, driver download destination URLs (Uniform Resource Locators) for downloading the drivers, and file download destination URLs for downloading Read Me files corresponding to the drivers, etc. as the information about the driver list. The driver is a program for expanding functions of the operating system, e.g. for using various peripheral devices. The Read Me file is a text file where information etc. such as functions, applicable devices, notes, and aversion history on the driver corresponding to the Read Me file are described by a so-called text.

The apparatus 100 receives the driver list from the server 200 (S104), and stores the driver list in its internal memory or the like. The apparatus 100 determines whether there is any driver which needs to be updated according to a predetermined condition (S105). That is, the apparatus 100 selects a driver which needs to be updated. Some of the drivers in the driver list may have already been installed in the apparatus 100. Therefore, the process is carried out for preventing installation of such drivers again.

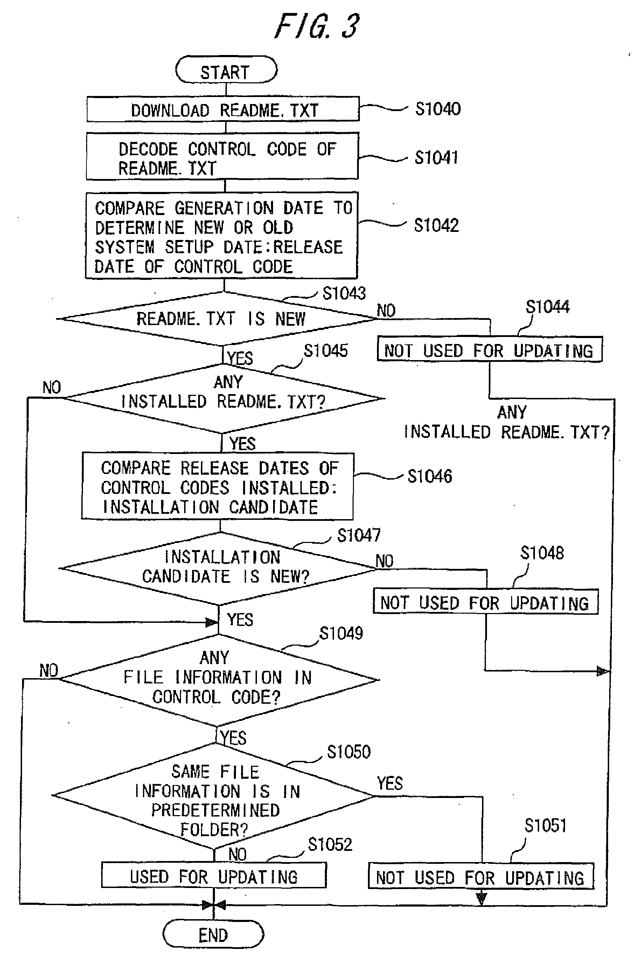

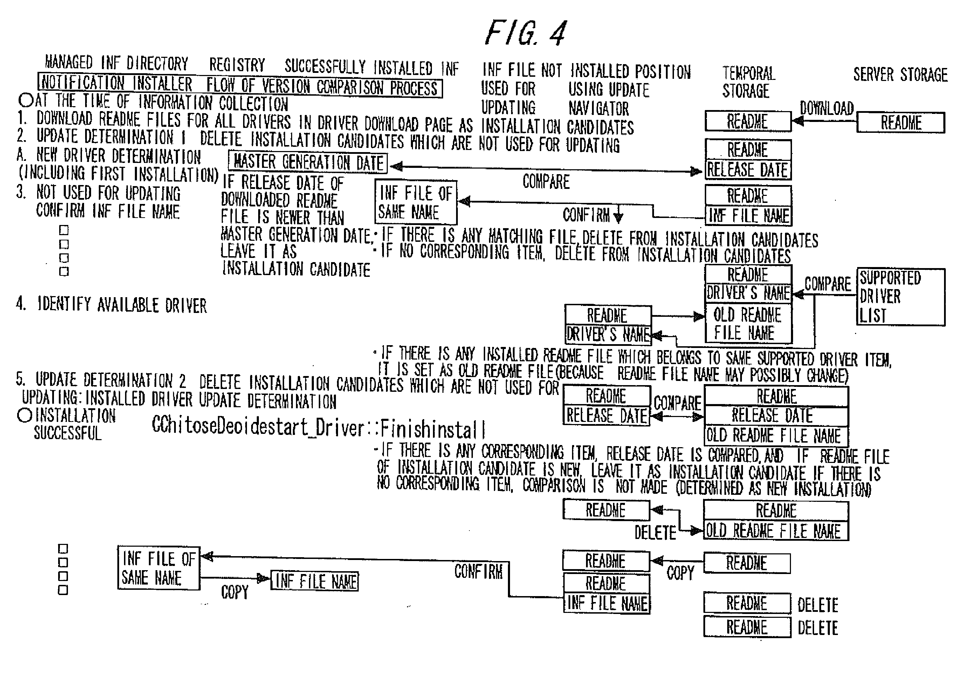

Various methods may be used for determining whether there is any driver which needs to be updated. An example of a determination method will be described with reference to FIG. 3. FIG. 3 is a flow chart for explaining the determination process by the apparatus 100. The content of a flow chart shown in FIG. 4 is substantially similar to that shown in FIG. 3.

When the apparatus 100 receives the driver list from the server 200 (S104), the apparatus 100 accesses the read me file download destination URL in the driver list, and downloads the Read Me file. If a plurality of read me file download destination URLs are included in the driver list, the apparatus 100 accesses the URLs for downloading a plurality of Read Me files (S1040). As described later, the downloaded Read Me file includes a control code (e.q., release date of a driver corresponding to the Read Me file) converted (encoded) into an invisible character string.

As described later, the apparatus 100 converts (decodes) the control code (e.g., release date), which has been converted into the invisible character string, into the original control code (e.g., release date) (S1041). Then, the apparatus 100 compares the decoded release date and a system setup date (master generation date) that is stored in its registry or the like (S1042), and determines whether the previously downloaded Read Me file is new or not (S1043). Thus, since the determination is made based on comparison of dates, in comparison with the determination based on comparison of versions, the determination accuracy is higher for the following reason. For example, it is assumed that there is a bug in the latest version of the driver uploaded on the server 200, and the older version of the driver is uploaded again. If the "old or new" determination is made based on the version, since the version of the driver updated on the server 200 is older than the version of the driver installed in the apparatus 100, the apparatus 100 does not download the driver uploaded on the server 200. This may be the predetermined condition for installing a candidate . In this respect, the determination accuracy is improved.

As a result, if it is determined that the previously downloaded Read Me file is not new (S1043: NO), the Read Me file is not used for updating (S1044). If it is determined that the previously downloaded Read Me file is new (S1043 : YES), the apparatus 100 determines whether there is any Read Me file which has been installed in the apparatus 100 (S1045). As a result, if it is determined that there is a Read Me file which has been installed in the apparatus 100 (S1045: YES), the apparatus 100 compares the release date of the Read Me file and the release date of the previously downloaded Read me file (both of release dates are obtained by decoding control codes) (S1046) to -determine whether the installation candidate (the previously downloaded file) is newer or not (S1047).

As a result, if it is determined that the installation candidate is not newer (S1047: NO), the installation candidate is not used for updating (S1048). If it is determined that the installation candidate is newer (S1047: YES), the apparatus 100 determines whether there is any specific information (File information) in the control code decoded from the previously downloaded Read Me file (S1049). As a result, if there is any specific information (S1049: YES), the apparatus 100 determines whether the specific information is the same as the specific information stored in a predetermined folder (S1050). As a result, if the same information is stored (S1050: YES), the installation candidate is not used for updating (S1051). If the same information is not stored (S1050: No), the installation candidate is used for updating (S1052). The apparatus 100 carries out the processing from steps S1041 to S1052 for every Read Me file downloaded in step S1040. In this manner, it is possible to determine whether there is any driver which needs to be updated, i.e. , it is possible to select a driver which needs to be updated.

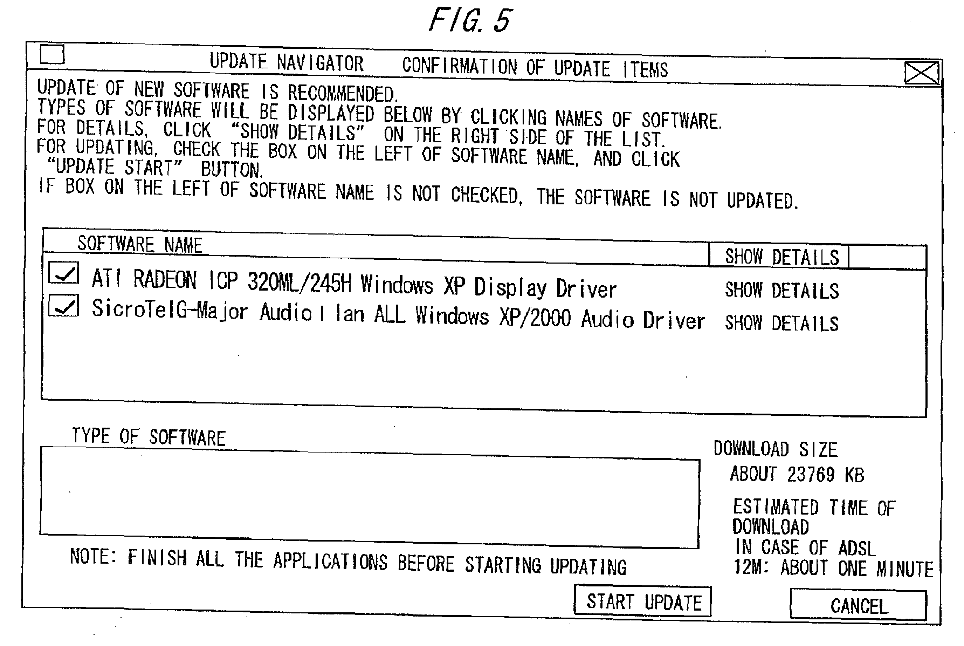

If any drivers which need to be updated are selected, the apparatus 100 displays information (e.g., driver's name) about every installation candidate driver, for example, as shown in FIG. 5 (S106). Then, if the update button shown in FIG. 5 is pressed by, e.g., clicking (S107), the apparatus 100 accesses the installation candidate driver download destination URL (included in the control code in the driver list or the Read Me file) (S108), and downloads the corresponding driver (S109, S110). Then, the apparatus 100 carries out the process of installing (updating) the downloaded driver (S111).

As described above, in the embodiment, the server 200 narrows down the driver programs which can be installed under the program execution environment of the apparatus 100, and sends the information in the form of a driver list. Thus, in comparison with the case in which all of the drivers are sent to the apparatus 100 without narrowing down the driver programs, the traffic on the network is reduced. Further, it is possible to install the driver automatically.

In the embodiment, though the installation candidate has been described as the driver, the invention is not limited in this respect. For example, the installation candidatemaybe an updating program (e.g., updated version of an application program).

(Conversion process to the invisible character string).

Next, conversion process to the invisible character string will be described with reference to the drawings.

In the process, the control code (corresponding to predetermined information of the invention) is converted (encoded) to the invisible character string, and the invisible character string is added or written in the Read Me file (corresponding to a predetermined file of the invention).

### (Prior Art)

Conventionally, in order to achieve stable operation of personal computers, after modified software is developed, the modified software is registered in a distribution server. Then, the client voluntarily accesses the server storing the registered modified software to determine whether there is any modified version of the software. If the modified version of the software is registered, the client manually downloads the modified version of the software, and installs the software in the client's (user's) system.

### (Problems to be solved)

However, in the conventional updating method, the client needs to confirm the modified software, and download it. Therefore, the client always has to pay attention to the maintenance of his personal computer. Further, the client has to send instructions for providing appropriate information suitable for his own computer to the distribution server of the modified software, and has to selectively download the necessary modified software from the distribution server. Therefore, the client needs to have some knowledge about the personal computer. It is difficult for ordinary clients to carry out these operations. Therefore, support information for clients is not utilized. Thus, the support quality for clients, and satisfaction of the clients are low.

In order to establish a system for achieving automatic downloading and installation of the modified software to solve these problems, it is necessary to develop a new dedicated server separately from the existing distribution server of the modified software. Thus, significantly high development cost is required. Further, since the maintenance for both systems (servers) is required, the burden for the maintenance operation on the support side increases, and the maintenance cost increases. Moreover, in order to achieve the automatic distribution to the client, the client's operation is required for user's registration. As a result, the range of support is limited, the support quality is lowered, and reputation of companies selling the apparatus is lowered. Further, when commands are attached to documents to be presented to the clients, it is likely that the client does not understand the meaning of marks (control codes), and is confused. As a result, the support quality is lowered.

It is desirable to prevent the client from viewing incomprehensible marks or the like in a document when the document is presented to the client by converting (encoding) the control code (corresponding to the predetermined information of the invention) to the invisible character string, and adding or writing the encoded control code in the Read Me file (corresponding to the predetermined file of the invention) as the document presented to the client.

### (Encoding process to the invisible character string)

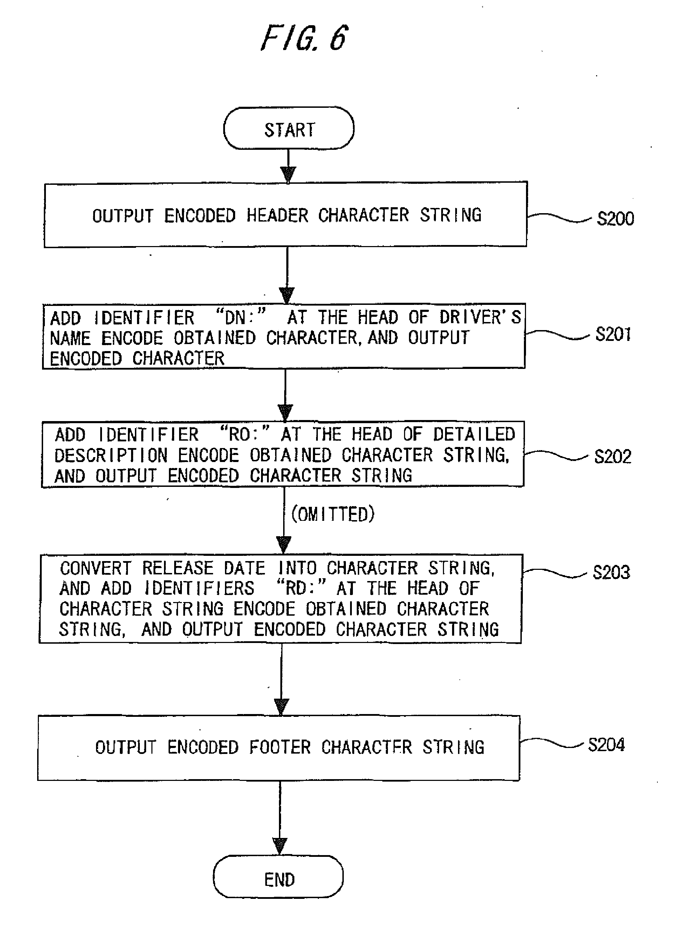

Next, a method of encoding the predetermined information to the invisible character string will be described with reference to the drawings. FIG. 6 is a flow chart for explaining the method of encoding the predetermined information to the invisible character string.

For example, the encoding is carried out when a predetermined computer reads and executes a predetermined program having a function of encoding the control code (corresponding to the predetermined information of the invention) into the invisible character string, and adding the encoded control code to the document to be presented to the client (the Read Me file herein).

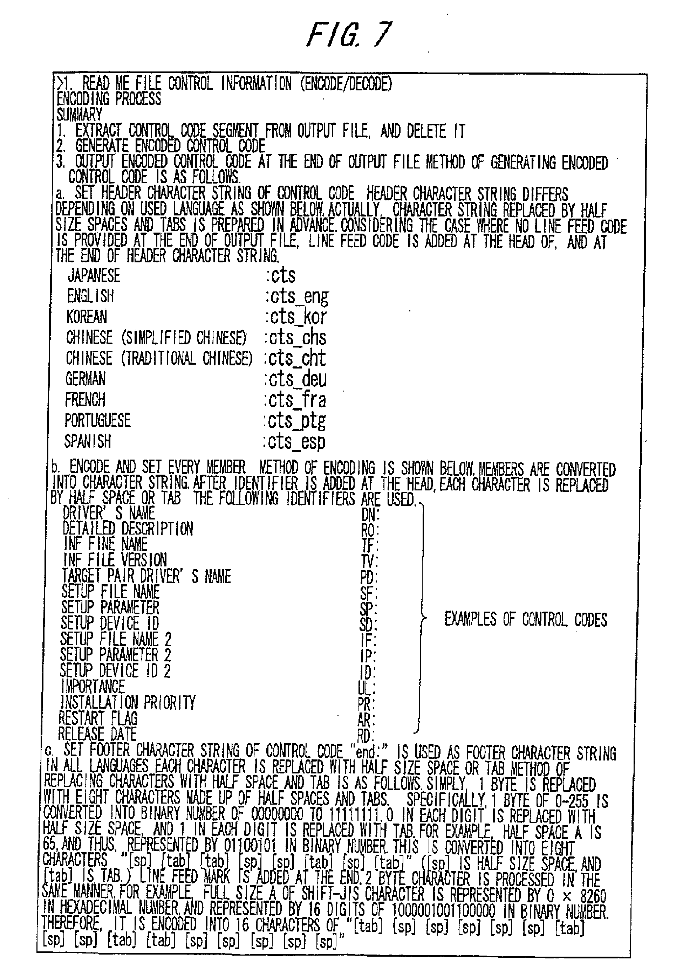

As shown in FIG. 7 , there are a driver's name, detailed description, ---snip---, and a release date, etc. as the control code. At the time of encoding, firstly, the predetermined computer sets (or outputs) a header character string of the control code (S200). The header character string differs depending on the used language. For example, if Japanese is used, "cts" is set, and if English is used, "cts_eng" is set (see FIG. 7). The header character string is replaced (encoded) using a "tab (corresponding to a first invisible character of the invention)" and a "half size space (corresponding to a second invisible character of the invention)", and added or written in a predetermined position in the document presented to the client, for example.

Next, processing sequence of encoding will be described. The predetermined computer converts (encodes) the control code (corresponding to the predetermined information of the invention) such as an automatic distribution command to the invisible character string formed by combining tabs and half spaces according to a predetermined rule. For example, shift-JIS full size "A" is denoted by a hexadecimal number of "8260", and a binary number of "1000 0010 0110 0000". Therefore, if the tab corresponds to the binary number of "1", and the half size space corresponds to the binary number of "0", the shift-JIS full size "A" can be converted (encoded) into an invisible character string [Tab] [Space] [Space] [Space] [Space] [Space] [Tab] [Space] [Space] [Tab] [Tab] [Space] [Space] [Space] [Space] [Space].

After the header character string is encoded into the invisible character string as described above, then, the predetermined computer adds identifiers to corresponding heads of respective control codes, and encodes the respective characters into the invisible characters as described above. For example, at the head of the driver's name, a corresponding identifier "DN:" is added (see FIG. 6). Then, the respective letters are encoded into the invisible characters, and, for example, added or written at a position immediately after the header character string in the document presented to the client (S201). The encoding is repeated until the final control code is reached (release date herein) (S203).

After encoding of the final control code is finished, the predetermined computer sets (outputs) a footer character string of the control code (S204). The footer character string is common in all the languages. For example, "end:" is used as the footer character string. The footer character string is encoded as described above and, for example, added or written at a position immediately after the final control code (release date herein) in the document presented to the client.

### (Decoding process of the invisible character string)

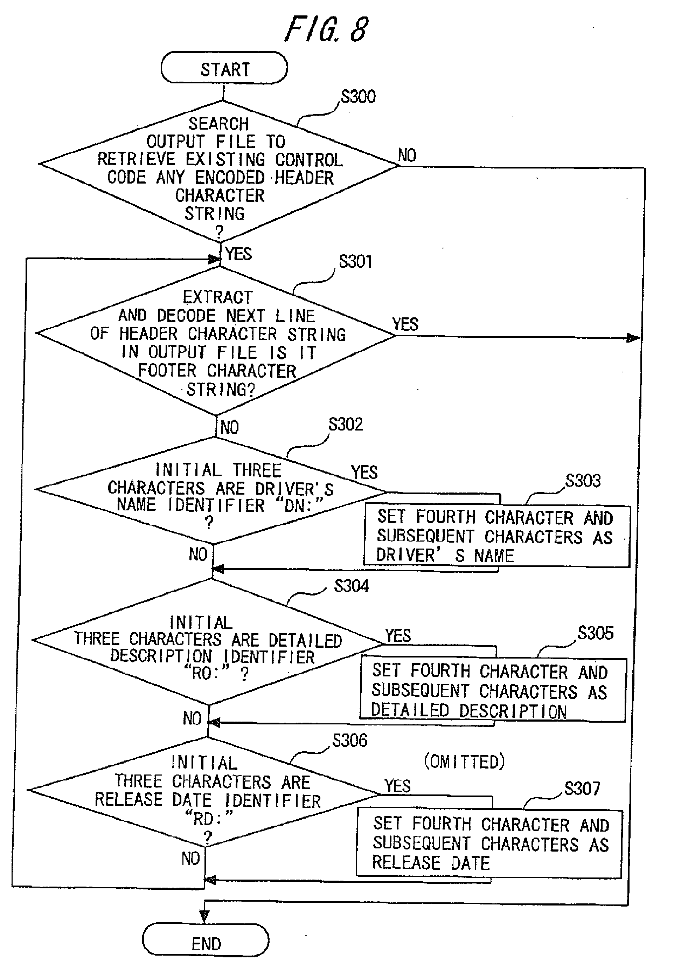

Next, a method of decoding the control code, which has been encoded into the invisible character string, into the original control code will be described with reference to the drawings. FIG. 8 is a flow chart for explaining the method of decoding the control code, which has been encoded into the invisible character string, into the original control code.

For example, the decoding is achieved when the apparatus 100 reads and executes a predetermined program having a function of decoding the control code which has been encoded into the invisible character string.

The apparatus 100 searches a predetermined file (e.g., Read Me file including the invisible character string generated by the encoding (and a visible character string)) to retrieve an encoded header character string (S300). If no encoded header character string is retrieved, the process is finished (S300: NO). If anyheader character string is retrieved, (S300: YES), the predetermined program extracts, and decodes the next line (S301). The decoding is achieved by carrying out the process opposite to the encoding. If the result of decoding is the footer character string (S301: YES), it is determined that decoding is completely finished, and the predetermined program finishes the decoding process.

If the result of decoding is not the footer character string (S301: NO), it is determined whether the initial three characters are the driver's name identifier "DN:" (S302). If the initial three characters are the driver's name identifier "DN:" (S302: YES), the fourth letter and the subsequent letters are set as the driver's name (S303). The decoding is repeated until the final control code (release date herein) is reached (S304 to S307). Then, if the result of decoding is the footer character string, the predetermined program finishes the decoding process (S301: YES).

As described above, the control code is converted into the invisible character string by combining tabs and half size spaces according to the predetermined rule (e.g., the tab corresponds to the binary number of "1", and the half space corresponds to the binary number of "0"). Then, the invisible character string is added or written in the Read Me file to generate the Read Me file including the invisible character string (and the visible character string).

Thus, it is possible to hide incomprehensible marks or the like from a client who reads a document to be presented to the client. That is, the control code is provided without awareness by users using the existing infrastructure where the users view the information. Based on the information, it is possible to provide a program user with information which is totally different from the document. Further, since both of the visible character string and invisible character string can be written in one single document presented to the client, it is also advantageous on the side of the provider of the control code. It is possible to provide the control code very easily and simply by adding the control code in the document presented to the client. Further, the client's system can be kept updated in the latest condition without requiring any client operation. Further, since the stability of the system improves day by day, it is possible to prevent a system hang-up and freeze which are unexpected by the client, and thus, it is possible to prevent the loss of the client's data. Further, the client can feel that the support of the maker selling the system is close to the client at all times, and can use the system without anxiety.

In the embodiment, the predetermined information is decoded into the invisible information, and the invisible information is added or written together with visible information in the predetermined file. However, the embodiment is not limited in this respect. For example, the predetermined information may not be decoded. The predetermined information as the visible information may be directly written (added) into the predetermined file together with the existing visible information. In this manner, the provider can provide the predetermined information (e.g., control code) simply by adding it in the document to be presented to the client.

### (Access distribution process No. 1)

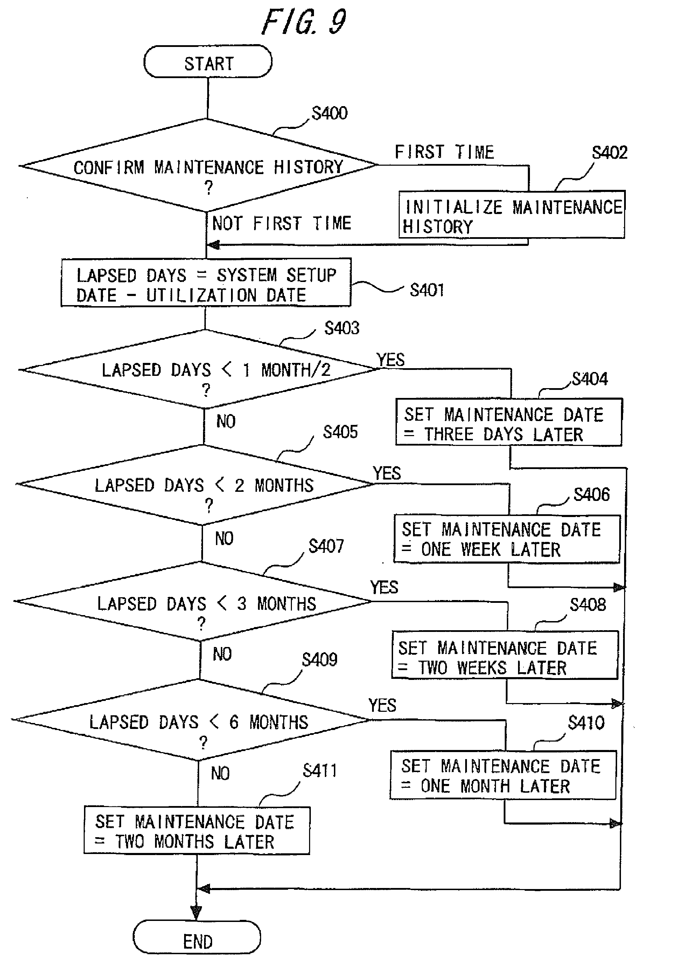

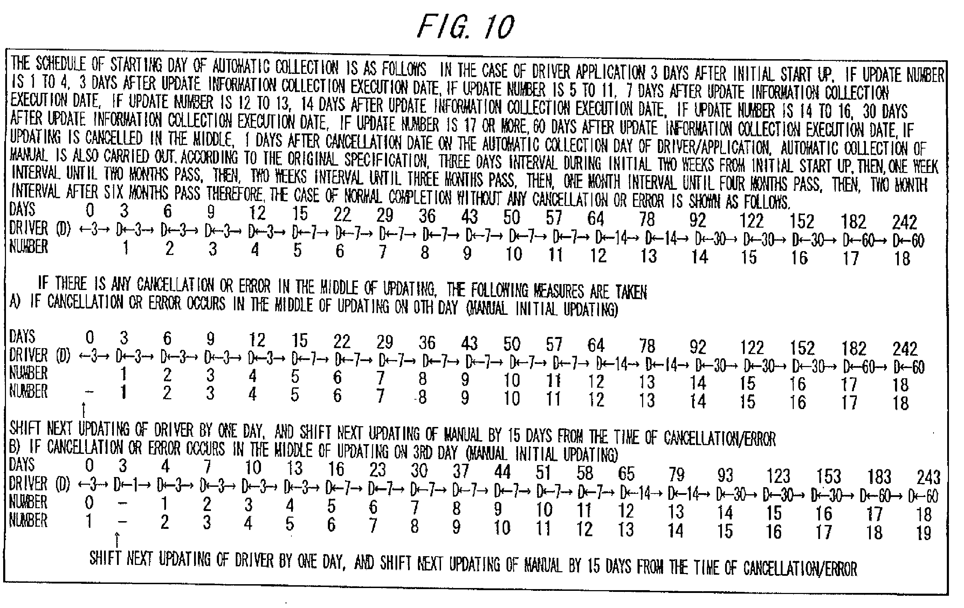

Next, a method of distributing the load, which has been generated with the increase of cumulative shipments of apparatuses (personal computers), imposed on the maintenance system in conjunction with its process will be described with reference to the drawings. FIGS. 9 and 10 are flow charts or the like for explaining a process of distributing the access from a plurality of apparatuses 100.

Each apparatus 100 confirms a maintenance history, and determines whether this is the first time maintenance has been attempted (S400). If rot (S400: NOT FIRST TIME), the apparatus 100 calculates lapsed days by the equation, lapsed day = system setup date (corresponding to a referencedate of the invention)-utilization date (S401). If this is the first time (S400: FIRST TIME), after initializing the maintenance history (S402), the apparatus 100 calculates the lapsed days in the same manner as the case of "NOT FIRST TIME" (S401).

Then, each time the lapsed days exceed a predetermined threshold, the apparatus 100 sets a timing later (which arrives later) than the previous access timing as the timing for the next access to the server 200 or the like through the network N (S403 to S411). Specifically, if the lapsed days < half month (threshold) (S403: YES), the maintenance date (the next access timing) is three days later (S404). If the lapsed days < two months (threshold) (S405: YES), the maintenance date (the next access timing) is one week later (S406). If the lapsed days < three months (threshold) (S407: YES), the maintenance date (the next access timing) is two weeks later (S408). Further, if the lapsed days < half year (S409: YES), the maintenance date (the next access timing) is one month later (S410). If the lapsed days exceeds six months, (S409: NO), the maintenance date (the next access timing) is two months later (S411). The apparatus 100 accesses the server 200 (specific URL) or the like at the timing as set in this manner. If there is a new driver or the like, the apparatus 100 automatically downloads it.

As described above, in the access distribution process, each time the lapsed days exceed a predetermined threshold, as the next timing to access the server 200 or the like through the network N, a timing later than the previous access timing is set. Therefore, it is possible to achieve the access distribution.

### (Access distribution process No.2)

Next, a process of distributing the access will be described.

This process is carried out for distributing automatic inquiry requests (access) from a plurality of apparatuses 100 at substantially the same time.

### (Prior Art)

In recent years, there is a demand for automatic condition monitoring and automatic condition maintenance using systems which carry out monitoring and enquiry at certain time intervals. In this case, the apparatus automatically accesses the server to make an enquiry to obtain information. In an approach for designating a specific day or a specific time, inquiries are concentrated at the specific time, and thus, there is a big gap between the peak time and non-peak time. Therefore, it is required to distribute the concentrated inquiries (access), and reduce the inquiries resulting from the concentration of the inquiries (enquiries) at the specific time.

In the case where it is necessary to obtain information at certain time intervals, if information is confirmed (accessed) every time the user starts using the apparatus (or at a specific time of a specific date designated in advance), enquiry concentration (access concentration) occurs at a specific date or a specific period of time. Therefore, extremely high load is generated at the specific period of time, and the system as the receiver of the inquiries often stops due to the excessive load of inquiries beyond the capacity of the system. The specific date or the specific time is designated for the information which is obtained at the certain intervals, even though the information does not require immediate urgency. Therefore, the inquiry is concentrated unduly at the specific date or the specific date.

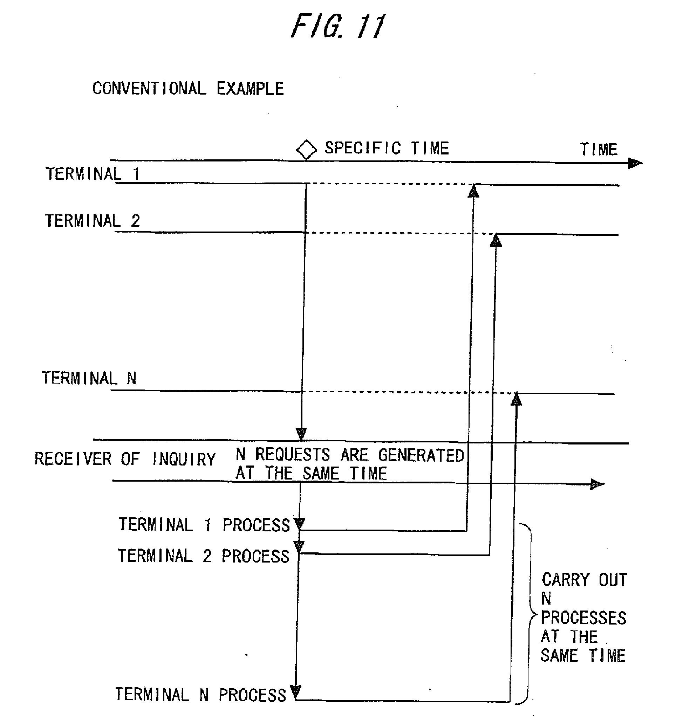

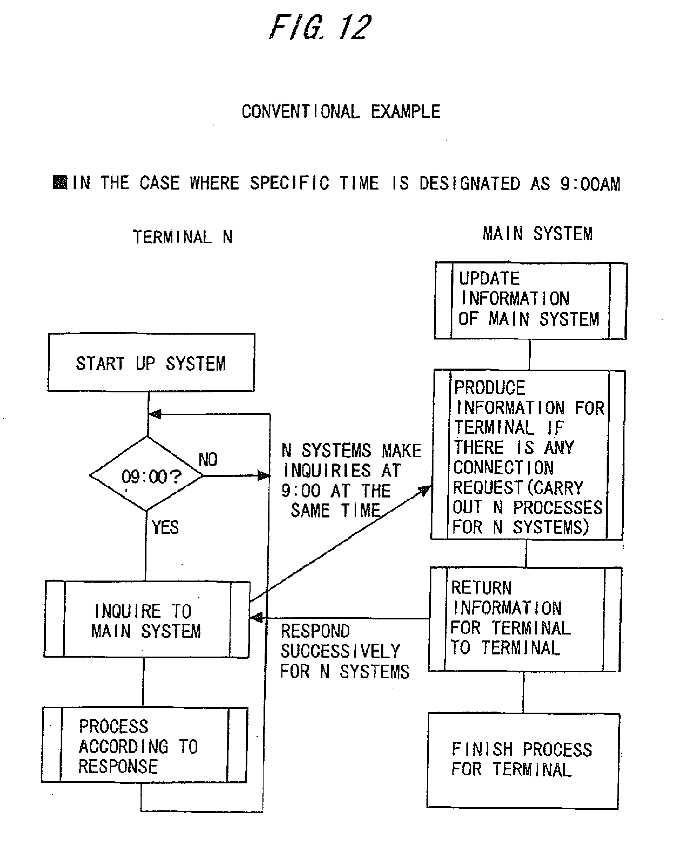

FIGS. 11 and 12 show a typical conventional example. An automaticmonitoring program installed in the apparatus 100' and amain system are taken as an example. Ata reference point a, when the automatic monitoring program installed in the apparatus 100' is started, programs installed in N apparatuses also make inquiries to the main system at the same time. The load for carrying out the requested process (requests from the N apparatuses for the response and immediate process) at the point a was high.

### (Problems to be solved)

Therefore, even if the automatic inquiry does not require any immediate urgency, a request is made for immediate processing at the specific date or the specific time at the point a. Further, when a lot of automatic inquiry requests are generated substantially at the same time, the system needs to receive the requests at one time.

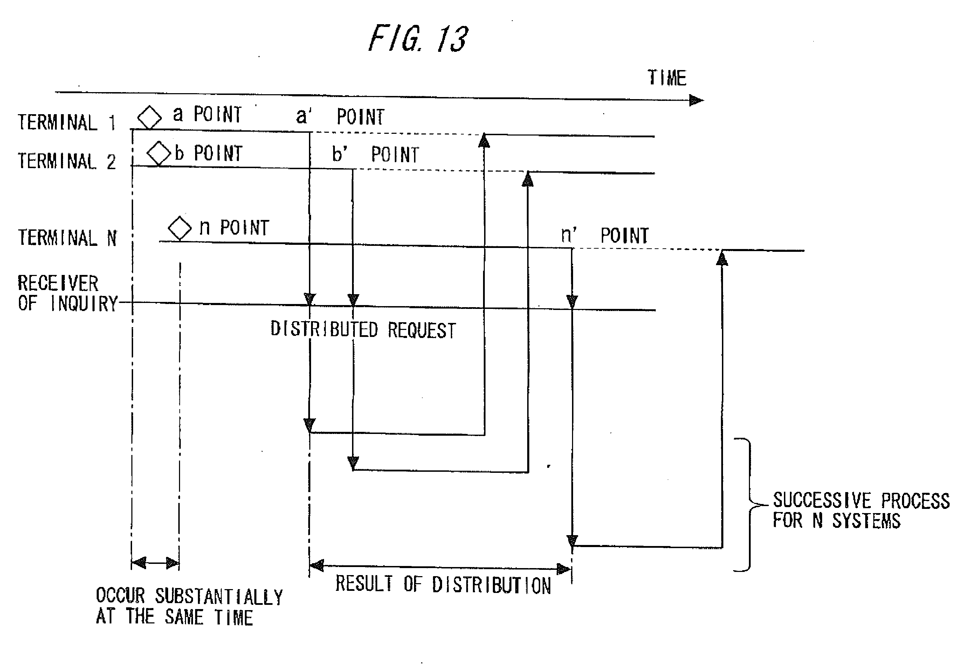

It is desirable to distribute the inquiry requests (access) in which as shown in FIG. 13, when events occur at substantially the same time points a, b for N apparatuses, the N apparatuses do not make inquiry requests (access) at the time points a, b, but make inquiry requests (access) at the points a' and b' after a predetermined time has passed.

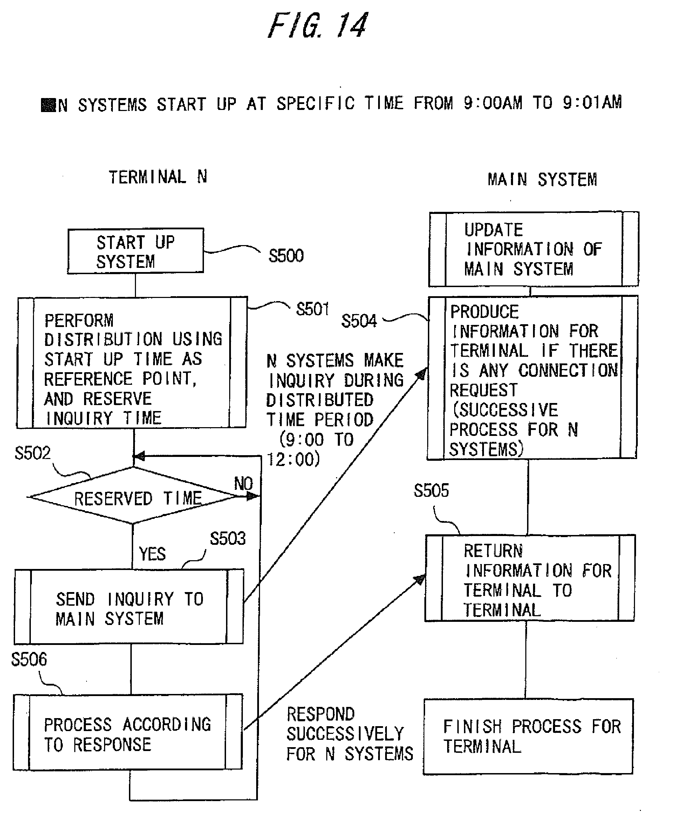

Next, the process of distributing the access will be described with reference to the drawings. FIG. 14 is a flow chart for explaining the process of distributing the access.

When the system starts up (S500), the time when the inquiry event occurs is set as a reference point, and the apparatus 100 makes an inquiry request to (i.e., accesses) a system as the receiver of the inquiry after a predetermined time from the reference point. Specifically, the apparatus 100 gains information about the time when the automatic maintenance program is loaded (corresponding to a program start time of the invention), sets the time as a reference point, and reserves (sets) the time for sending a request to a maintenance system for confirmation of the latest information as the distributed request time (S501). The inquiry start time (distributed request time) can be calculated by the following equation.

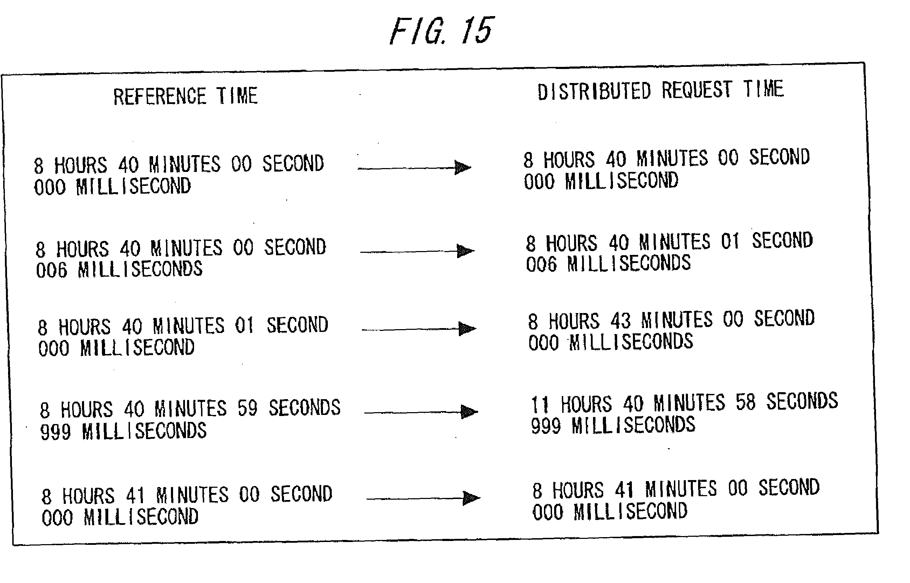

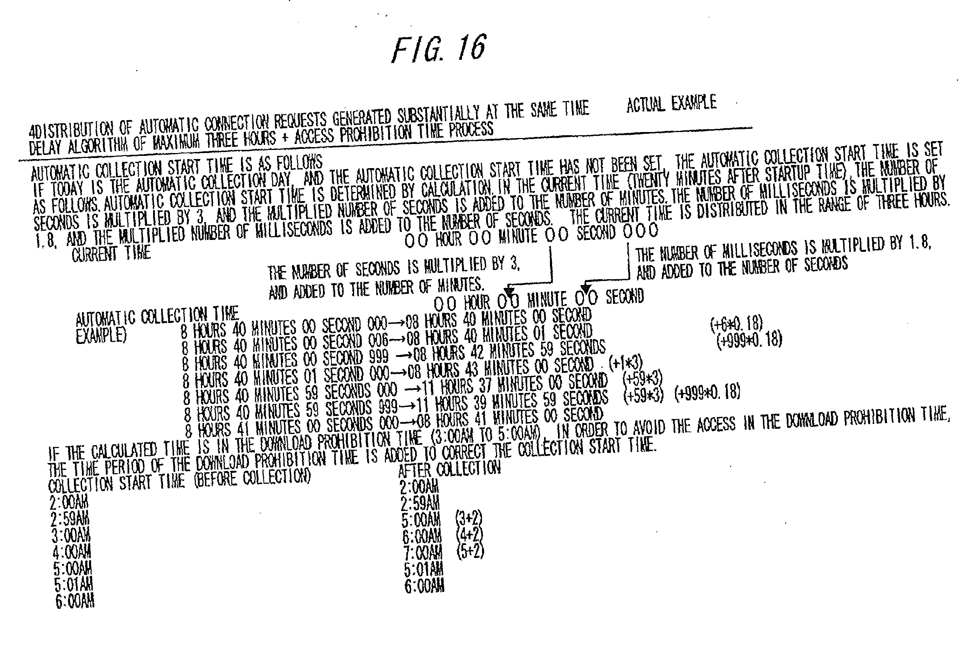

(Equation) hours of reference time point + (minutes of reference time point + seconds of reference time point x coefficient 1) minutes + (seconds of reference time point + milliseconds of reference time point x coefficient 2) seconds + milliseconds of reference time point + offset time According to the equation, for example, when the reference time point is 8 hours 40 minutes 00 second 000 millisecond, the coefficient 1 is 3, the coefficient 2 is 0.18, and the offset time is 0 hour 0 minute 000 millisecond, it is possible to distribute the requests generated in one minute to about three hours (degree of distribution) . The distribution time can be adjusted by adjusting the coefficient 1. FIGS. 15 and 16 show the relationship between the respective reference time points and the distributed request time calculatedbased on the reference time points.

The automatic maintenance program waits for the reserved request time (S502). When the reserved request time comes (S503), the automatic maintenance program requests the maintenance system (main system) for maintenance information (S503). The maintenance system supplies the maintenance information for the apparatus 100 (S504, S505). The apparatus 100 performs a predetermined process according to a response from the maintenance system (S506).

As described above, in the apparatuses each carrying out monitoring or inquiry at certain time intervals, it is possible to distribute the automatic inquiry requests of the status monitor or status maintenance made at substantially the same time to an expected period of time. Thus, it is possible to reduce the traffic of the requests generated at the same time, distribute the peak traffic, and reduce the cost for development and maintenance of the infrastructure.

In the embodiment, the time when the system starts up and the automatic maintenance program is loaded is used as the reference point. However, the invention is not limited in this respect. For example, such time + a (e.g., 20 minutes) may be used as the reference point, and some other time may be used as the reference point.

If the calculated time is in the download prohibition time (e.g., 3:00AM to 5:00AM), the time period of the download prohibition time is added to the initially reserved request time. In this manner, it is possible to avoid the access in the download prohibition time.

In one aspect of the invention, a computer can download only data which is suitable for its program execution environment, without requiring user intervention.

The invention may be embodied in various other forms without deviating from its scope or principle features. Therefor, the embodiment has been described only for illustrative purposes in every respect, and shall not be interpreted to limit the invention. As has been described, the various aspects of the invention can be combined as appropriate.
A. A program for causing a computer to execute the steps of:
   sending a request including execution environment identification information for identifying the computer's program execution environment to a predetermined server through a network;
   receiving a list including installation candidates which can be installed under the program execution environment identified by the execution environment identification information from the predetermined server through the network;
   selecting an installation candidate from the list according to a predetermined condition; and
   installing the selected installation candidate.
B. A program according to A, wherein the execution environment identification information includes information for identifying a model name of the computer, and information for identifying an operating system installed in the computer.
C. A program according to A or B, wherein the installation candidate comprises a driver program.
D. A program according to A, B or C, wherein the list includes a download destination address of the installation candidate and the selected installation candidate is downloaded from the download destination address, and installed.
E. A program for causing a computer to execute the steps of:
   obtaining a date regarding an installation candidate;
   comparing the date regarding the installation candidate with a predetermined date;
   determining whether the installation candidate is to be installed based on a result of the comparison; and
   installing the installation candidate when it is determined that the installation candidate is to be installed.
F. A program for causing a computer to execute the steps of:
   prompting a user to input predetermined information;
   converting the input predetermined information to an invisible character string by combining a first invisible character and a second invisible character according to a predetermined rule; and
   adding the converted invisible character string to a predetermined file.
G. A program for causing a computer to execute the steps of:
   obtaining a predetermined file;
   extracting an invisible character string including a first invisible character and a second invisible character from the obtained predetermined file; and
   converting the extracted invisible character string into its original predetermined information according to a predetermined rule.
H. A program according F or G, wherein the predetermined information comprises a control code.
I. A program for causing a computer connected to a network to execute the steps of:
   setting a time later than a previous access time as the next access time to access a server when the elapsed number of days from a reference date exceeds a predetermined threshold; and
   accessing the server at the set time through the network.
J. A program for causing a computer to execute the steps of:
   obtaining a start time of starting the program; and
   accessing a predetermined server through the network at a timing determined based on the obtained start time.
K. An information processing apparatus, comprising:
   a sending unit for sending a request including execution environment identification information identifying the apparatus's program execution environment to a predetermined server through a network;
   a receiving unit for receiving a list including installation candidates which can be installed under the program execution environment identified by the execution environment identification information from the predetermined server through the network;
   a selecting unit for selecting an installation candidate from the list according to a predetermined condition; and
   an installing unit for installing the selected installation candidate.
L. An information processing apparatus according to K, wherein the execution environment identification information includes information for identifying a model name of the computer, and information for identifying an operating system installed in the computer.
M. An information processing apparatus according to K or L, wherein the installation candidate comprises a driver program.
N. An information processing apparatus according to K, L or M, wherein the list includes a download destination address of the installation candidate and the selected installation candidate is downloaded from the download destination address, and installed.
O. An information processing apparatus, comprising:
   an obtaining unit for obtaining a date regarding an installation candidate;
   a comparing unit for comparing the date regarding the installation candidate with a predetermined date;
   a determining unit for determining whether the installation candidate is to be installed based on a result of the comparison; and
   an installing unit for installing the installation candidate when it is determined that the installation candidate is to be installed.
P. An information processing apparatus, comprising:
   a prompting unit for prompting a user to input predetermined information;
   a converting unit for converting the input predetermined information to an invisible character string by combining a first invisible character and a second invisible character according to a predetermined rule; and
   an adding unit for adding the converted invisible character string to a predetermined file.
Q. An information processing apparatus, comprising
   an obtaining unit for obtaining a predetermined file;
   an extracting unit for extracting an invisible character string including the first invisible character and the second invisible character from the obtained predetermined file; and
   a converting unit for converting the extracted invisible character string into the original predetermined information according to a predetermined rule.
R. An information processing apparatus, according to P or Q, wherein the predetermined information comprises a control code.
S. An information processing apparatus connected to a network, comprising:
   a setting unit for setting a time later than a previous access time as the next access time to a server when the elapsed number of days from a reference date exceeds a predetermined threshold; and
   an accessing unit for accessing the server at the set time through the network.
T. An information processing apparatus, comprising:
   an obtaining unit for obtaining a start time of starting the program; and
   an accessing unit for accessing a predetermined server through the network at a timing determined based on the obtained start time.
U. An installing method for executing installation on a computer connected to a network, comprising the steps of
   sending a request including execution environment identification information for identifying the computer's program execution environment to a predetermined server through the network;
   receiving a list including installation candidates which can be installed under the program execution environment identified by the execution environment identification information from the predetermined server through the network;
   selecting an installation candidate from the list according to a predetermined condition; and
   installing the selected installation candidate.
V. An installing method according to U, wherein the execution environment identification information includes information for identifying a model name of the computer, and information for identifying an operating system installed in the computer.
W. An installing method according to U or V, wherein the installation candidate comprises a driver program.
X. An installing method according to U, V or W,
   wherein the list includes a download destination address of the installation candidate and the selected installation candidate is downloaded from the download destination address, and installed.
Y. An installing method comprising causing a computer to execute the steps of:
   obtaining a date regarding an installation candidate;
   comparing the date regarding the installation candidate with a predetermined date;
   determining whether the installation candidate is to be installed based on a result of the comparison; and
   installing the installation candidate when it is determined that the installation candidate is to be installed.
Z. An invisible character processing method, comprising the steps of:
   prompting a user to input predetermined information;
   converting the input predetermined information to an invisible character string by combining a first invisible character and a second invisible character according to a predetermined rule; and
   adding the converted invisible character string to a predetermined file.
α. An invisible character processing method, comprising the steps of:
   obtaining a predetermined file;
   extracting an invisible character string including a first invisible character and a second invisible character from the obtained predetermined file; and
   converting the extracted invisible character string into the original predetermined information according to a predetermined rule.
β. An invisible character processing method according to Z or α,wherein the predetermined information comprises a control code.
γ A method of distributing access from computers connected to a network, comprising the steps of:
   setting a time later than a previous access time as the next access time to a server when an elapsed number of days from a reference date exceeds a predetermined threshold; and
   accessing the server at the set time through the network.
δ. A method of distributing access from computers, comprising the steps of:
   obtaining a start time, and accessing a predetermined server through the network at a timing determined based on the obtained start time.
ε. A system connected to a network, comprising:
   an information processing apparatus according to any of K, L or M or N; and
   a predetermined server.
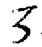 . A system including an information processing apparatus and a predetermined server, comprising:
   an obtaining unit obtaining a date regarding an installation candidate;
   a comparing unit comparing the date regarding the installation candidate with a predetermined date;
   a determining unit determining whether the installation candidate is to be installed based on a result of the comparison; and
   an installing unit installing the installation candidate when it is determined that the installation candidate is to be installed.
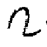 . A system connected to a network, including a server and an information processing apparatus, comprising:
   a setting unit setting a time later than a previous access time as the next access time to the server when an elapsed number of days from a reference date exceeds a predetermined threshold; and
   an accessing unit accessing the server at the set time through the network.
θ. A system connected to a network and equipped with an information processing apparatus and a predetermined server, comprising:
   an obtaining unit obtaining a start time; and
   an accessing unit accessing the predetermined server through the network at a timing determined based on the obtained start time.
λ. A system according to claim ε, wherein the predetermined server includes a receiving unit receiving the request sent from the information processing apparatus, a retrieving unit retrieving information about the installation candidates which can be installed under the program execution environment identified by the execution environment identification information included in the request from a predetermined database, and a sending unit sending the retrieval result as the list including the installation candidates to the information processing apparatus.
µ. A program for causing a computer to execute the steps of:
   calculating (equation) hours of reference time point + (minutes of reference time point + seconds of reference time point x coefficient 1) minutes + (seconds of reference time point + milliseconds of reference time point x coefficient 2) seconds + milliseconds of reference time point + offset time; and
   accessing a predetermined server through the network at timing of hour, minute, and second indicated by the calculation result.
ξ. An information processing apparatus, comprising
   a calculating unit calculating (equation) hours of reference time point + (minutes of reference time point + seconds of reference time point x coefficient 1) minutes + (seconds of reference time point + milliseconds of reference time point x coefficient 2) seconds + milliseconds of reference time point + offset time; and
   an accessing unit accessing the predetermined server through the network at timing of hour, minute, and second indicated by the calculation result.
π. A method of distributing access from computers, comprising the steps of:
   calculating (equation) hours of reference time point + (minutes of reference time point + seconds of reference time point x coefficient 1) minutes + (seconds of reference time point + milliseconds of reference time point x coefficient 2) seconds + milliseconds of reference time point + offset time; and
   accessing a predetermined server through the network at timing of hour, minute, and second indicated by the calculation result.
σ. A system connected to a network and equipped with an information processing apparatus and a predetermined server, comprising a calculating unit calculating (equation) hours of reference time point + (minutes of reference time point + seconds of reference time point x coefficient 1) minutes + (seconds of reference time point + milliseconds of reference time point x coefficient 2) seconds + milliseconds of reference time point + offset time; and
   an accessing unit accessing the predetermined server through the network at timing of hour, minute, and second indicated by the calculation result.

## Claims

1. A program for causing a computer connected to a network to execute the steps of:
setting a time later than a previous access time as the next access time to access a server when the elapsed number of days from a reference date exceeds a predetermined threshold; and
accessing the server at the set time through the network.

2. A program for causing a computer to execute the steps of:
obtaining a start time of starting the program; and
accessing a predetermined server through the network at a timing determined based on the obtained start time.

3. An information processing apparatus connected to a network, comprising:
a setting unit for setting a time later than a previous access time as the next access time to a server when the elapsed number of days from a reference date exceeds a predetermined threshold; and
an accessing unit for accessing the server at the set time through the network.

4. An information processing apparatus, comprising:
an obtaining unit for obtaining a start time of starting the program; and
an accessing unit for accessing a predetermined server through the network at a timing determined based on the obtained start time.

5. A method of distributing access from computers connected to a network, comprising the steps of:
setting a time later than a previous access time as the next access time to a server when an elapsed number of days from a reference date exceeds a predetermined threshold; and
accessing the server at the set time through the network.

6. A method of distributing access from computers, comprising the steps of:
obtaining a start time, and accessing a predetermined server through the network at a timing determined based on the obtained start time.

7. A system connected to a network, comprising:
an information processing apparatus comprising:
a sending unit for sending a request including execution environment identification information identifying the apparatus's program execution environment to a predetermined server through a network;
a receiving unit for receiving a list including installation candidates which can be installed under the program execution environment identified by the execution environment identification information from the predetermined server through the network;
a selecting unit for selecting an installation candidate from the list according to a predetermined condition; and
an installing unit for installing the selected installation candidate; and
a predetermined server including
a receiving unit for receiving the request sent from the information processing apparatus,
a retrieving unit for retrieving information about the installation candidates which can be installed under the program execution environment identified by the execution environment identification information included in the request from a predetermined database, and
a sending unit for sending the retrieval result as the list including the installation candidates to the information processing apparatus.

8. A system according to Claim 7, wherein the execution environment identification information includes information for identifying a model name of the computer, and information for identifying an operating system installed in the computer.

9. A system according to Claim 7 or 8, wherein the list includes a download destination address of the installation candidate and the selected installation candidate is downloaded from the download destination address, and installed.

10. A system connected to a network, including a server and an information processing apparatus, comprising:
a setting unit setting a time later than a previous access time as the next access time to the server when an elapsed number of days from a reference date exceeds a predetermined threshold; and
an accessing unit accessing the server at the set time through the network.

11. A system connected to a network and equipped with an information processing apparatus and a predetermined server, comprising:
an obtaining unit obtaining a start time; and
an accessing unit accessing the predetermined server through the network at a timing determined based on the obtained start time.

12. A program for causing a computer to execute the steps of:
calculating (equation) hours of reference time point + (minutes of reference time point + seconds of reference time point x coefficient 1) minutes + (seconds of reference time point + milliseconds of reference time point x coefficient 2) seconds + milliseconds of reference time point + offset time; and
accessing a predetermined server through the network at timing of hour, minute, and second indicated by the calculation result.

13. An information processing apparatus, comprising
a calculating unit calculating (equation) hours of reference time point + (minutes of reference time point + seconds of reference time point x coefficient 1) minutes + (seconds of reference time point + milliseconds of reference time point x coefficient 2) seconds + milliseconds of reference time point + offset time; and
an accessing unit accessing the predetermined server through the network at timing of hour, minute, and second indicated by the calculation result.

14. A method of distributing access from computers, comprising the steps of:
calculating (equation) hours of reference time point + (minutes of reference time point + seconds of reference time point x coefficient 1) minutes + (seconds of reference time point + milliseconds of reference time point x coefficient 2) seconds + milliseconds of reference time point + offset time; and
accessing a predetermined server through the network at timing of hour, minute, and second indicated by the calculation result.

15. A system connected to a network and equipped with an information processing apparatus and a predetermined server, comprising a calculating unit calculating (equation) hours of reference time point + (minutes of reference time point + seconds of reference time point x coefficient 1) minutes + (seconds of reference time point + milliseconds of reference time point x coefficient 2) seconds + milliseconds of reference time point + offset time; and
an accessing unit accessing the predetermined server through the network at timing of hour, minute, and second indicated by the calculation result.
